Europäisches Patentamt

(19) European Patent Office

Office européen des brevets

(11) Publication number: **0 339 361 B1**

## (12) EUROPEAN PATENT SPECIFICATION

(45) Date of publication of patent specification:
03.04.91 Bulletin 91/14

(51) Int. Cl.⁵: **F16G 1/28, F16H 7/18**

(21) Application number: **89106452.9**

(22) Date of filing: **12.04.89**

(54) Flexible-belt transmission unit for driving rotatable members.

(30) Priority: **28.04.88 IT 2035888**

(43) Date of publication of application:
**02.11.89 Bulletin 89/44**

(45) Publication of the grant of the patent:
**03.04.91 Bulletin 91/14**

(84) Designated Contracting States:
**DE FR GB IT**

(56) References cited:
**EP-A- 0 222 637**
**EP-A- 0 259 141**
**FR-A- 2 551 166**
**US-A- 2 988 925**

(73) Proprietor: **BRAIN WAVE S.R.L.**
**Villaggio Aurelia 31**
**I-20060 Cassina de 'Pecchi (IT)**

(72) Inventor: **Canni Ferrari, Cesare Mario**
**Villaggio Aurelia 31**
**I-20060 Cassina de'Pecchi (Milan) (IT)**

(74) Representative: **Giambrocono, Alfonso, Dr.**
**Ing. et al**
**Ing. A. Giambrocono & C. S.r.l. Via Rosolino**
**Pilo 19/B**
**I-20129 Milano (IT)**

## Description

This invention relates to flexible-belt transmission units for driving rotatable members.

Transmission units of this type have been known for a long time and find application in the most diverse fields. They are used particularly when it is required to drive small-dimension rotatable members such as gear wheels, pivots or shafts located in housing of relatively small size. Normally, such members drive other rotatable or non-rotatable members. A typical example of a situation of this type is the case of electromechanical devices for operating the side windows of motor vehicles. They have however many other uses such as operating curtains, sliding panels or doors, tangential headlamp and windscreen wipers and openable roofs, and in bicycle transmissions.

US-A-2 988 925 discloses a flexible-belt transmission unit. The flexible belt consists of an endless belt having on its inner face a series of equally spaced teeth which engage corresponding spaces between the teeth of each of two coplanar gear wheels. A strain resisting member is embedded in the belt whose basic material is a rubber material. The strain resisting member is a continuous, flexible, linear element.

The rubber material of the belt is inherently "soft" and has not a good resistance to wear. Therefore the inner side of the belt is lined with a fabric jacket forming a wear resisting surface.

As to the method for producing the belt, in US-A-2 988 925 reference is made to US-A-2 507 852 (US-A-2 988 925 being an improvement over the former). Moreover this process is very cumbersom. The belt is formed in three steps and moreover it requires vulcanizing.

According to US-A-2 988 925 other methods may be also used. In any case, whatever the manufacturing method of the belt, vulcanization as well as the wear-resisting fabric are always required.

It is an aim of the present invention to perform a flexible-belt transmission unit of the above mentioned type, which does not suffer the drawbacks of the known transmission units, and which can be constructed easily and at low cost. Said object is attained according to the invention by a transmission unit of the above mentioned type, characterised in that the end portions of the linear reinforcing element or elements are not directly connected together, the basic material of the belt is of a thermoplastic material and the belt is manufactured by injection moulding, the gradual transmission of forces between the ends of the linear reinforcement element or elements being provided by the basic plastics material which surrounds them.

As is apparent, said belt can be construced very simply and at low cost, to also provide transmission of even considerable forces, depending on the type of transmission unit concerned.

Moreover the belt constructed in this manner does not comprise joints which could represent point of weakness or could complicate their mounting on the gear wheels. The individual linear linear reinforcement element can be in wire, plate, cable or stranded form, or be a strip formed from woven wires provided said element is sufficiently flexible and resistant. The reinforcement element material can for example be steel, nylon or kevlar(R). The reinforcement element or elements can be easily embedded in the plastics material to form the belt, by well known injection moulding methods.

If only one linear reinforcement element is provided, its length will exceed that of the total length of the belt, the end portions of said reinforcement element then overlapping through a certain length sufficient to ensure transmission of the required force. The reinforcement element can also be considerably longer than the belt so that the reinforcement element appears a number of times in a cross-sectional view through the belt.

According to a modification of the present invention, at least two linear reinforcement elements are provided each having a length less than the total length of the belt, the position of the gap between the ends of each reinforcement element being staggered relative to the gaps in the other reinforcement elements.

The invention will be more apparent from the description of one embodiment thereof given hereinafter by way of example with reference to the accompanying drawing in which :

Figure 1 is an exploded perspective view of a transmission unit according to the invention ;

Figure 2 is a plan view of part of the belt with projections ;

Figure 3 is a cross-section therethrough on the line III-III of Figure 2.

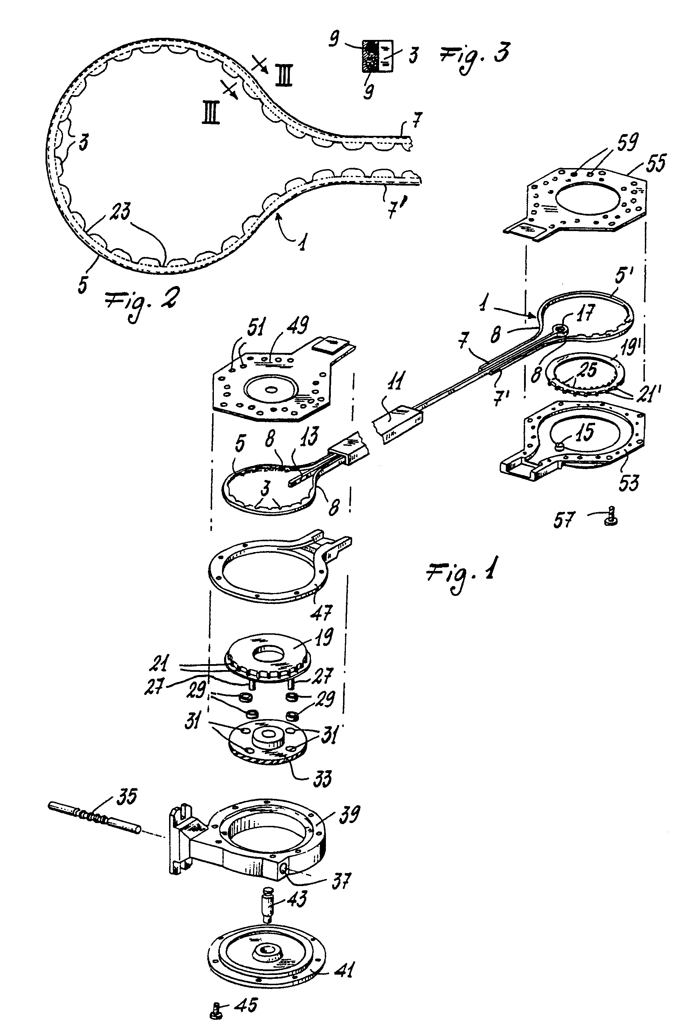

From the figures it can be seen that the transmission unit comprises a flexible element 1 in the form of a belt with inwardly extending projections 3, most clearly shown in Figures 2 and 3. The belt 1 has a particular annular shape. It comprises two end loops 5 and 5' in the form of a circular arc having an angle exceeding 180°, and two adjacent rectilinear portions 7 and 7' disposed between the end loops. The belt 1 is completed by four connection portions 8. Figure 3 shows a cross-section through the belt 1, in which the internal reinforcement element can be seen consisting of a steel wire cable 9 embedded in the belt formed of plastics material which can be thermo-moulded by injection (such as nylon). The length of the cable 9 substantially exceeds the total length of the belt 1, so that the end portions of the cable overlap through a certain length. The cross-section through the belt shown in Figure 3 is taken in this overlap region. The reinforcement element therefore comprises no joint connecting its ends together, force transmission being provided by the plastics material surrounding the reinforcement element itself. This results in considerable constructional simplification, to the advantage of cost.

Instead of said cable, the reinforcement element can consist for example of two or more steel wires each slightly shorter than the belt, the relative gaps being offset from each other by the greatest possible distance. The reinforcement element can also consist of a steel wire wound as a spiral within the belt and again having a length considerably greater than the total length of the belt.

The rectilinear portions 7 and 7' of the belt are enclosed in a single rectilinear sheath 11 of rectangular cross-section, constructed of known antifriction material such as self-lubricating nylon. In this manner, because of the particular shape of the belt 1 and the use of only one sheath 11, a transmission unit is obtained which is of considerably smaller overall dimensions than known transmission units.

A separator strip 13 keeps the two rectilinear portions 7 and 7' of the belt separated so that even if the belt slightly slacknes the respective projections 3 do not come into mutual contact, with the danger of mutual damage. The separator 13 is in effect a simple strip fixed to the protection casing at one or both its ends. In the illustrated case, a lug 17 provided at one end of the strip 13 is arranged to engage with a peg 15 fixed to the element 53 of the protection casing. As in the case of the sheath 11, the strip 13 is also conveniently of antifriction material.

According to a modification of the present invention, instead of being in a single piece, the sheath is constructed in the form of a succession of separate portions fixed in a preferably removable manner to the separator strip 13. In this manner an extremely pliable sheath structure is obtained, which can be very useful during mounting. In addition, such a sheath cannot be stressed by those excessive forces which can arise for a variety of reasons and which could break it or limit its life.

The two loop ends 5 an 5' of the belt 1 engage in two respective gear wheels 19 and 19', of which the wheel 19 is the drive wheel and the wheel 19' is the driven wheel. The respective teeth 21 and 21' of the two gear wheels become inserted in the spaces 23 (Figure 2) between the projections 3 on the belt 1.

The gear wheel 19' comprise internal teeth 25 for engagement with an adaptor, for example for the operating pin of a manual motor vehicle window regulator.

The gear wheel 19 comprises four pins 27 protecting from its lower surface and extending parallel to the axis of rotation of the gear wheel. Said pins are inserted by way of respective jerk dampers 29 into corresponding holes 31 provided in a helical gear 33 for a worm. This helical gear is coaxial to the gear wheel 19 and is arranged to engage with the worm 35. This latter is rotatably housed in a suitable bore 37 provided in an annular element 39 which receives both the helical gear 33 and the worm 35. The helical gear 33 can rotate about a pin 43 supported by a base 41. Above the annular element 39 there is provided a first substantially annular seat 47 for the belt 1. The seat 47 is closed upperly by a cover 49. Screws 45 connect together the base 41, the annular element 39, the first seat 47 and the cover 49, to form the protection casing for the drive gear wheel 19. The worm 35 is coaxial and rigid with the shaft of an electric motor (not shown) which drives the transmission unit.

At the loop 5' of the belt 1 there is provided a second protection casing comprising a second seat 53 to which said locking peg 15 for the separator 13 is fixed. A cover 55 fixable to the second seat 53 by screws 57 completes the protection casing for the driven wheel 19'. The covers 49 and 55 comprises a series of pairs of threaded holes 51 and 59 respectively, which enable the transmission unit to be fixed in position in its location. Both the first seat 47 and the second seat 53 are formed to house the respective end of the sheath 11.

The described embodiment shown on the drawing is parrticularly suitable for motorizing manual vehicle window regulators.

The configuration of the transmission unit can obviously be different from that described, especially if a transmission unit of this type for operating side windows is required on a series scale for incorporation into a vehicle under manufacture. A reinforced toothed belt will again be provided in this case. The form of ring can be different from that already described, and can incorporate rollers or idle gears. Obviously in such a case a single sheath cannot be provided, and it may be convenient not to provide any sheath. The drive gear wheel will however always be only one in number.

For applications other than the operation of window regulators more than one driven gear wheel can be provided to operate more than one rotatable member.

## Claims

1. A flexible-belt transmission unit for driving rotatable members, comprising a flexible belt (1) extending endlessly about at least two coplanar gear wheels (19, 19'), one of which drives, and which are rotatably supported about their axis, the flexible belt having on its inner face a series of equidistant projections (3) arranged to engage said gear wheels, the belt being reinforced by at least one flexible linear element (9) embedded in it, said linear reinforcing element having a tensile strenght substantially greater than that of the basic material in which it is embedded, characterised in that the end portions of the linear reinforcing element (9) or elements are not directly connected together, the basic material of the belt (1) is of a thermoplastic material and the belt is manufactured by injection moulding, the gradual transmission of forces between the ends of the linear reinforcement element (9) or elements being provided by the basic plastics material which surrounds them.

2. A transmission unit as claimed in claim 1, characterised in that the flexible belt (1) comprises two end loops (5, 5') in the form of a circular arc having an angle greater than 180°, and two adjacent rectilinear portions (7, 7') disposed between the end loops.

3. A transmission unit as claimed in claim 2, characterised in that the two adjacent rectilinear portions (7, 7') of the flexible belt (1) are contained in a single sheat (11) of antifriction material.

4. A transmission unit as claimed in claim 2 or 3, characterised in that the rectilinear portions (7, 7') are separated by a separator strip (13) of antifriction material.

5. A transmission unit as claimed in claim 4, characterised in that the sheat (11) is formed of a succession of separate portions connected to the separator strip (13).

6. A transmission unit as claimed in any one of the preceding claims, characterised in that the belt (1) has only one reinforcement element (9), which is of length greater than that of the total length of the belt.

7. A transmission unit as claimed in claim 6, characterised in that the belt has at least two reinforcement elements (9) each of length less than the total length of the belt, the position of the gap between the ends of each reinforcement element being offset from the position of the gaps relative to the other reinforcement elements.

8. A transmission unit as claimed in any one of the preceding claims, characterised in that the reinforcement element (9) is of wire, plate, cable or stranded form or is a strip formed from woven wires.

9. A transmission unit as claimed in claim 8, characterised in that the reinforcement element (9) is steal, nylon or kevlar[R].

## Ansprüche

1. Eine Transmissionseinheit mit elastischem Treibriemen für den Antrieb drehbarer Bauglieder, bestehend aus einem elastischen Riemen (1), der über wenigstens zwei in derselben Ebene liegende Zahnräder (19, 19'), eines davon ein Antriebsrad, die drehbar um ihre Achse abgestützt sind, endlos läuft, und auf dessen Innenfläche eine Reihe Vorsprünge (3) in gleichem Abstand so angeordnet sind, dass sie in besagte Zahnräder eingreifen, der Riemen ist durch mindestens ein in ihn eingebettetes flexibles Linearelement (9) verstärkt, wobei die Zugfestigkeit des besagten linearen Verstärkungselements erheblich stärker ist als die des Grundwerkstoffs, in den es eingebettet ist, dadurch gekennzeichnet, dass die Endteile des oder der linearen Verstärkungselemente(s) (9) nicht direkt miteinander verbunden sind, der Grundwerkstoff des Riemens (1) aus Thermoplast besteht und der Riemen durch Spritzguss hergestellt ist, und die allmähliche Übertragung der Kräfte zwischen den Enden des oder der linearen Verstärkungselemente(s) durch den sie umgebenden Grundkunststoff bewirkt wird.

2. Eine Transmissionseinheit nach Beanspruchung in Anspruch 1, dadurch gekennzeichnet, dass der elastische Riemen (1) zwei Endschleifen (5, 5') in Form eines Kreisbogens mit einem Winkel > 180° und zwei zwischen den Endschleifen angeordnete nebeneinanderliegende geradlinige Teilstücke (7, 7') enthält.

3. Eine Transmissionseinheit nach Beanspruchung in Anspruch 2, dadurch gekennzeichnet, dass die beiden nebeneinanderliegenden geradlinigen Teilstücke (7, 7') des elastischen Riemens (1) in einer Ummantelung (11) aus Antifriktionswerkstoff enthalten sind.

4. Eine Transmissionseinheit nach Beanspruchung in Anspruch 2 oder 3, dadurch gekennzeichnet, dass die geradlinigen Teilstücke (7, 7') durch einen Trennstreifen (13) aus Antifriktionswerkstoff voneinander getrennt sind.

5. Eine Transmissionseinheit nach Beanspruchung in Anspruch 4, dadurch gekennzeichnet, dass die Ummantelung (11) aus aufeinanderfolgend angeordneten, mit dem Trennstreifen (13) verbundenen getrennten Teilstücken gebildet wird.

6. Eine Transmissionseinheit nach Beanspruchung in einem beliebigen der vorstehenden Ansprüche, dadurch gekennzeichnet, dass der Riemen (1) nur mit einem Verstärkungselement (9), das länger ist als die Gesamtlänge des Riemens, ausgerüstet ist.

7. Eine Transmissionseinheit nach Beanspruchung in Anspruch 6, dadurch gekennzeichnet, dass der Riemen mit mindestens zwei Verstärkungselementen (9), deren Einzellänge kürzer ist als die Gesamtlänge des Riemens, ausgerüstet ist, wobei die Position des Spalts zwischen den Enden eines jeden Verstärkungselements von der Position der Spalten im Verhältnis zu den anderen Verstärkungselementen gegeneinander versetzt ist.

8. Eine Transmissionseinheit nach Beanspruchung in einem beliebigen der vorstehend genannten Ansprüche, dadurch gekennzeichnet, dass das Verstärkungselement (9) aus Draht, Blech, Kabel oder verseilter Form besteht oder ein Streifen aus Drahtgewebe ist.

9. Eine Transmissionseinheit nach Beanspruchung in Anspruch 6, dadurch gekennzeichnet, dass das Verstärkungselement (9) aus Stahl, Nylon oder Kevlar[R] besteht

## Revendications

1. Unité de transmission par courroie flexible pour faire tourner des organes rotatifs, comportant une courroie flexible (1) s'étendant sans fin autour d'au moins deux roues dentées coplanaires (19, 19'), dont l'une entraîne, et qui sont entraînées en rotation autour de leur axe, la courroie flexible ayant sur sa face intérieure une série de saillies équidistantes (3) prévues pour venir s'engager dans les dites roues dentées, la courroie étant renforcée par au moins un élément linéaire flexible (9) noyé dans celle-ci, le dit élément de renfort linéaire ayant une résistance à la traction sensiblement plus grande que celle de la matière de base dans laquelle il est noyé, caractérisée en ce que les parties extrêmes de l'élément ou des éléments linéaires de renfort (9) ne sont pas directement reliées entre elles, la matière de base de la courroie (1) est une matière thermoplastique et la courroie est fabriquée par moulage par injection, la transmission graduelle des efforts entre les extrémités du ou des éléments linéaires de renfort (9) étant fournie par la matière plastique de base qui les entoure.

2. Unité de transmission suivant revendication 1, caractérisée en ce que la courroie flexible (1) comprend deux boucles d'extrémité (5, 5') ayant la forme d'un arc circulaire ayant un angle supérieur à 180°, avec deux parties rectilignes adjacentes (7, 7') disposées entre les boucles d'extrémité.

3. Unité de transmission suivant revendication 2, caractérisée en ce que les deux parties rectilignes adjacentes (7, 7') de la courroie flexible (1) sont contenues dans une seule gaine (11) faite d'une matière antifriction.

4. Unité de transmission suivant revendication 2 ou 3, caractérisée en ce que les parties rectilignes (7, 7') sont séparées par une bande de séparation (13) faite d'une matière antifriction.

5. Unité de transmission suivant revendication 4, caractérisée en ce que la gaine (11) est faite d'une succession de parties séparées reliées par la bande de séparation (13).

6. Unité de transmission suivant l'une quelconque des revendications précédentes, caractérisée en ce que la courroie (1) comporte un seul élément de renfort (9), d'une longueur supérieure à celle de la longueur totale de la courroie.

7. Unité de transmission suivant revendication 6, caractérisée en ce que la courroie a au moins deux éléments de renfort (9), chacun d'une longueur inférieure à la longueur totale de la courroie, la position de l'espace formé entre les extrémités de chaque élément de renfort étant décalée de la position des espaces relatifs aux autres éléments de renfort.

8. Unité de transmission suivant l'une quelconque des revendications précédentes, caractérisée en ce que l'élément de renfort (9) est fait de fil, de tôle, de câble ou de fil toronné ou est constitué par une bande faite de fils tissés.

9. Unité de transmission suivant revendication 8, caractérisée en ce que l'élément de renfort (9) est de l'acier, du nylon ou du kevlar$^R$.

Fig. 1
Fig. 2
Fig. 3